(19) **Europäisches Patentamt / European Patent Office / Office européen des brevets**

(11) **EP 4 213 357 A1**

(12) **EUROPEAN PATENT APPLICATION**
published in accordance with Art. 153(4) EPC

(43) Date of publication:
**19.07.2023 Bulletin 2023/29**

(21) Application number: **21908849.9**

(22) Date of filing: **28.10.2021**

(51) International Patent Classification (IPC):
**H02M 1/42** (2007.01)

(52) Cooperative Patent Classification (CPC):
**F24F 11/88; F24F 11/89; H02M 1/42**

(86) International application number:
**PCT/CN2021/127087**

(87) International publication number:
**WO 2022/134848 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.12.2020 CN 202011551456**

(71) Applicants:
• **GD Midea Air-Conditioning Equipment Co., Ltd.**
  **Foshan, Guangdong 528311 (CN)**
• **Midea Group Co., Ltd.**
  **Foshan, Guangdong 528311 (CN)**

(72) Inventors:
• **HUO, Zhaojing**
  **Foshan, Guangdong 528311 (CN)**
• **BI, Ran**
  **Foshan, Guangdong 528311 (CN)**
• **HUANG, Zhaobin**
  **Foshan, Guangdong 528311 (CN)**
• **TANG, Jintian**
  **Foshan, Guangdong 528311 (CN)**

(74) Representative: **Whitlock, Holly Elizabeth Ann et al**
  **Maucher Jenkins**
  **Seventh Floor Offices**
  **Artillery House**
  **11-19 Artillery Row**
  **London SW1P 1RT (GB)**

(54) **CARRIER FREQUENCY CONTROL METHOD AND APPARATUS FOR POWER FACTOR CORRECTION, AND AIR CONDITIONER**

(57) A carrier frequency control method and apparatus for power factor correction, and an air conditioner. The carrier frequency control method is to use a special carrier frequency control near a zero-crossing point of a variable carrier frequency control method. For a carrier frequency corresponding to an input voltage/input current near the zero-crossing point, the carrier frequency is limited to be a fixed value or the carrier frequency increases following the decrease of the input voltage/input current.

```
┌─────────────────────────────────────────────┐
│ Acquire an input voltage Uin of a PFC circuit │───  S100
└─────────────────────────────────────────────┘
                      │
                      ▼
┌─────────────────────────────────────────────┐
│ When the input voltage Uin is greater than a  │───  S200
│ set voltage, control a carrier frequency of    │
│ the PFC circuit to decrease with the decrease  │
│ of the input voltage Uin                       │
└─────────────────────────────────────────────┘
                      │
                      ▼
┌─────────────────────────────────────────────┐
│ When the input voltage Uin is less than the    │───  S300
│ set voltage, set the carrier frequency to a     │
│ fixed value or control the carrier frequency to │
│ increase with the decrease of the input         │
│ voltage Uin                                     │
└─────────────────────────────────────────────┘
```

Fig. 3

## Description

## CROSS-REFERENCE TO RELATED APPLICATION

The present application claims priority to Chinese patent application No. 202011551456.9 filed on December 24, 2020, and entitled "CARRIER FREQUENCY CONTROL METHOD AND DEVICE FOR POWER FACTOR CORRECTION, AND AIR CONDITIONER", the entire contents of which are incorporated herein by reference.

## TECHNICAL FIELD

The present disclosure relates to the technical field of electronic circuit control, in particular to a carrier frequency control method and device for power factor correction, and an air conditioner.

## BACKGROUND

In the existing control technology for performing Power Factor Correction (PFC) by digital software, PFC may be performed by means of a variable carrier frequency control method. The variable carrier frequency control method requires that a carrier frequency varies according to the magnitude of an input voltage, and has different carrier frequency values at different input voltages. Although the variable carrier wave control method can reduce harmonics to a certain extent, zero-crossing distortion is likely to occur at the zero-crossing point, that is, when the input voltage is zero, an input current is not zero, which is equivalent to increasing harmonics, affecting the stability of a circuit near the zero-crossing point.

## SUMMARY

The following is an overview of the subject described in detail herein. This overview is not intended to limit the scope of protection of the claims.

Embodiments of the present disclosure provide a carrier frequency control method and device for Power Factor Correction (PFC), and an air conditioner. In response to an input voltage or an input current of a PFC circuit being too low, a carrier frequency is controlled to be a fixed value or increase, such that the input current at a zero-crossing point may follow the input voltage, and the harmonics at the zero-crossing point can be reduced.

In accordance with a first aspect of the present disclosure, an embodiment provides a carrier frequency control method for PFC, which is applied to a PFC circuit. The carrier frequency control method includes:

acquiring an input voltage of the PFC circuit;

in response to the input voltage being greater than a set voltage, controlling a carrier frequency of the PFC circuit to decrease with a decrease of the input voltage;

in response to the input voltage being less than the set voltage, setting the carrier frequency to a fixed value or controlling the carrier frequency to increase with a decrease of the input voltage.

The carrier frequency control method for PFC provided by the embodiment according to the first aspect of the present disclosure has at least the following beneficial effects: for a carrier frequency corresponding to an input voltage near the zero-crossing point, by limiting the carrier frequency to a fixed value or increasing the carrier frequency with the decrease of the input voltage, the situation where an input current of the PFC circuit cannot follow the input voltage near the zero-crossing point can be alleviated, leading to reduced current harmonics and an improved operating stability of the PFC circuit.

In some embodiments, a second phase interval is a degenerate interval. That is, two endpoints of the second phase interval are identical and equal to a peak phase of a voltage phase, and the carrier frequency converges to one point in the second phase interval.

In some embodiments, controlling the carrier frequency to increase with the decrease of the input voltage includes:

taking a ratio of the set voltage to the input voltage as a first ratio;
controlling the carrier frequency to increase by an $n^{th}$ power of the first ratio, where n is greater than 1.

Because the input voltage near the zero-crossing point is small, the input voltage is taken as the denominator of the first ratio, such that the carrier frequency can increase with the decrease of the input voltage, thereby changing the phenomenon that the carrier frequency near the zero-crossing point is too low and ensuring the current harmonics near the zero-crossing point.

In some embodiments, in response to a frequency value obtained after increasing the carrier frequency by the $n^{th}$ power of the first ratio being greater than a maximum frequency threshold, the carrier frequency is set to be the maximum frequency threshold. Since the input voltage approaches zero when approaching the zero-crossing point, to prevent the carrier frequency from being too large after multiplying by the first ratio, a maximum carrier frequency value, i.e., a maximum frequency threshold, is defined. Each carrier frequency exceeding the maximum frequency threshold is limited to the maximum frequency threshold to ensure the normal operation of the circuit.

In accordance with a second aspect of the present disclosure, an embodiment provides a carrier frequency control method for PFC, which is applied to a PFC circuit. The carrier frequency control method includes:

acquiring an input current of the PFC circuit;

in response to the input current being greater than a set current, controlling the carrier frequency of the PFC circuit to decrease with a decrease of the input current; and

in response to the input current being less than the set current, setting the carrier frequency to a fixed value or controlling the carrier frequency to increase with a decrease of the input current.

The carrier frequency control method for PFC provided by the embodiment according to the second aspect of the present disclosure has at least the following beneficial effects: for a carrier frequency corresponding to an input current near a zero-crossing point, by limiting the carrier frequency to a fixed value or increasing the carrier frequency with the decrease of the input current, the situation where an input current of the PFC circuit cannot follow the input voltage near the zero-crossing point can be alleviated, leading to reduced current harmonics and an improved operating stability of the PFC circuit.

In some embodiments, controlling the carrier frequency to increase with the decrease of the input current includes:

taking a ratio of the set current to the input current as a second ratio;
controlling the carrier frequency to increase by an $m^{th}$ power of the second ratio, where m is greater than 1.

Because the input current near the zero-crossing point is small, the input current is taken as the denominator of the second ratio, such that the carrier frequency can increase with the decrease of the input current, thereby changing the phenomenon that the carrier frequency near the zero-crossing point is too low and ensuring the current harmonics near the zero-crossing point.

In some embodiments, in response to a frequency value obtained by increasing the carrier frequency by the $m^{th}$ power of the second ratio being greater than a maximum frequency threshold, the carrier frequency is set to be the maximum frequency threshold. Since the input current approaches zero when approaching the zero-crossing point, to prevent the carrier frequency from being too large after multiplying by the second ratio, a maximum carrier frequency value, i.e., a maximum frequency threshold, is defined. Each carrier frequency exceeding the maximum frequency threshold is limited to the maximum frequency threshold to ensure the normal operation of the circuit

In accordance with a third aspect of the present disclosure, an embodiment provides a carrier frequency control device for PFC. The device includes at least one processor, and a memory configured to be communicatively connected with the at least one processor, where the memory stores an instruction executable by the at least one processor which, when executed by the at least one processor, causes the at least one processor to perform the carrier frequency control method for PFC described above in the first aspect or the carrier frequency control method for PFC described above in the second aspect.

The carrier frequency control device provided by the embodiment according to the third aspect of the present disclosure has at least the following beneficial effects: by performing the carrier frequency control method by the carrier frequency control device, for a carrier frequency corresponding to an input voltage/input current near the zero-crossing point, by limiting the carrier frequency to a fixed value or increasing the carrier frequency with the decrease of the input voltage/input current, the situation where the input current of the PFC circuit cannot follow the input voltage near the zero-crossing point can be alleviated, leading to reduced current harmonics and an improved operating stability of the PFC circuit.

In accordance with a fourth aspect of the present disclosure, an embodiment provides a circuit board, including the carrier frequency control device described above in the third aspect.

The circuit board provided by the embodiment according to the fourth aspect of the present disclosure has at least the following beneficial effects: the carrier frequency control device is integrated on a circuit board, so that the circuit board has the function of the carrier frequency control device. For a carrier frequency corresponding to an input voltage/input current near the zero-crossing point, by limiting the carrier frequency to a fixed value or increasing the carrier frequency with the decrease of the input voltage/input current, the situation where the input current of the PFC circuit cannot follow the input voltage near the zero-crossing point can be alleviated, leading to reduced current harmonics and an improved operating stability of the PFC circuit.

In accordance with a fifth aspect of the present disclosure, an embodiment provides an air conditioner, including the circuit board described above in the fourth aspect.

The air conditioner provided by the embodiment according to the fourth aspect of the present disclosure has at least the following beneficial effects: by disposing a circuit board in an air conditioner to control the air conditioner, a ripple current of the PFC circuit at the zero-crossing point in air conditioner can be controlled. For a carrier frequency corresponding to an input voltage/input current near the zero-crossing point, by limiting the carrier frequency to a fixed value or increasing the carrier frequency with the decrease of the input voltage/input current, the situation where the input current of the PFC circuit cannot follow the input voltage near the zero-crossing point can be alleviated, leading to reduced current harmonics and an improved operating stability of the PFC circuit.

In accordance with a fifth aspect of the present disclosure, an embodiment provides a computer-readable storage medium, storing a computer-executable instruction which, when executed by a computer, causes the computer to perform the PFC circuit control method described above in the first aspect.

Other features and advantages of the present disclosure will be set forth in the following description, and partly become obvious from the description, or understood by implementing the present disclosure. The objects and other advantages of the present disclosure can be realized and obtained by the structure particularly pointed out in the description, claims and drawings.

## BRIEF DESCRIPTION OF DRAWINGS

Fig. 1 is a circuit diagram of a Power Factor Correction (PFC) circuit provided by an embodiment of the present disclosure;

Fig. 2 is another circuit diagram of a PFC circuit provided by an embodiment of the present disclosure;

Fig. 3 is a flowchart of a carrier frequency control method provided by an embodiment of the present disclosure;

Fig. 4 is a flowchart showing that a carrier frequency increases with the decrease of an input voltage provided by an embodiment of the present disclosure;

Fig. 5 is a flowchart of a carrier frequency control method provided by an embodiment of the present disclosure;

Fig. 6 is a flowchart showing that a carrier frequency increases with the decrease of an input current provided by an embodiment of the present disclosure; and

Fig. 7 is a schematic diagram showing connection relationships of modules of a control device of the present disclosure.

## DETAILED DESCRIPTION

In order to make the objects, technical schemes and advantages of the present disclosure clear, the present disclosure will be further described in detail in conjunction with the drawings and embodiments. It should be understood that the embodiments described here are only used to illustrate the present disclosure, and are not intended to limit the present disclosure.

Embodiments of the present disclosure provide a carrier frequency control method and device for Power Factor Correction (PFC), and an air conditioner. Control intervals of carrier frequencies are divided according to a set voltage or a set current. When an input voltage or an input current is greater than the set voltage or the set current, a carrier frequency of a PFC circuit is controlled by mean of a variable carrier frequency control method, so that the carrier frequency varies positively with the input voltage or the input current, while when the input voltage or the input current is less than the set voltage or the set current, the carrier frequency is set to a fixed value or varies negatively with the input voltage or the input current, thereby reducing the current harmonics near the zero-crossing point and improving the operating stability of the PFC circuit.

The embodiments of the present disclosure will be further illustrated in conjunction with the drawings.

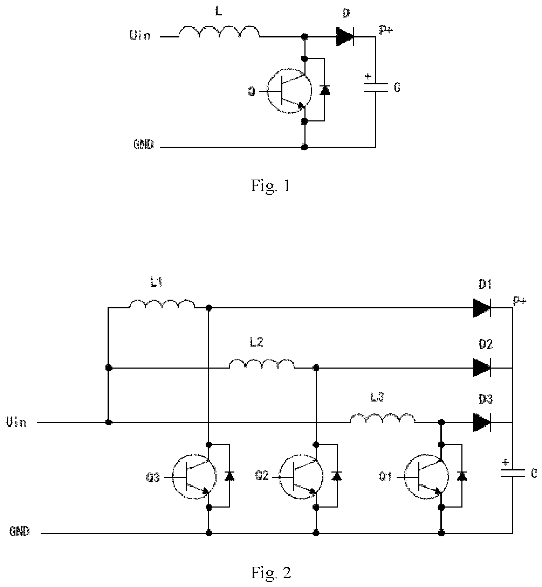

An embodiment of the present disclosure provides a PFC circuit control method, applied to a PFC circuit. Referring to Fig. 1, a circuit structure of the PFC circuit includes a direct current (DC) input terminal, a boost module, a filter module and a controller which are connected in sequence. A DC voltage of the DC input terminal is obtained by alternating current (AC) input rectification, and is an input voltage Uin of the PFC circuit. A DC current corresponding to the input voltage Uin is an input current Iin of the current PFC circuit. The DC input terminal is connected to the boost module. The boost module is configured for boost, and includes an inductance device and a switching device. The inductance device is connected to a positive electrode of the DC input terminal in series. One end of the switching device is connected to the inductance device, the other end of the switching device is connected to a negative electrode of the DC input terminal, and a controlled end of the switching device is connected to an enabling pin of the controller. The filter module is connected to the switching device in parallel. A load (not labeled in Fig. 1) is connected to two ends of the filter module in parallel. The DC voltage input to the load is an output voltage Uo of the current PFC circuit. Therefore, the controller can realize the boost output and the PFC control process by controlling the On and Off of the switching device.

It can be understood that the PFC circuit may further include a diode. A positive electrode of the diode is connected to a connection point of the inductance device and the switching device, and a negative electrode of the diode is connected to one end of the filter module. The filter module may be implemented by a capacitor device or other filter circuit. For the convenience of illustration, a single capacitor is adopted to represent the filter circuit in Fig. 1.

The boost module of the PFC circuit may also adopt another circuit structure. Referring to Fig. 2, the boost module is divided into three branches connected in parallel, each branch including an inductance device and a switching device which are connected in series. One end of each of the three inductance devices is connected to the positive electrode of the DC input terminal, and the other end of each of the three inductance devices is connected to the negative electrode of the DC input terminal through the switching device, where the controlled ends of the three switching devices are all connected to the enabling pin of the controller. Each of the three branches of the boost module may also be provided with a diode, where a positive electrode of the diode is connected to a connection point of the inductance device and the switching device, and a negative electrode of the diode is connected to one end of the filter module. The circuit shown in Fig. 2 can also realize PFC control.

It can be understood that the above two PFC circuits only illustrate some forms of circuits capable of implementing the carrier frequency control method in the embodiments of the present disclosure by way of example, and the control method in the embodiments of the present disclosure can be implemented based on various variations, optimizations, expansions, etc., made based on the above PFC circuits, which will not be repeated here to avoid excessive enumeration.

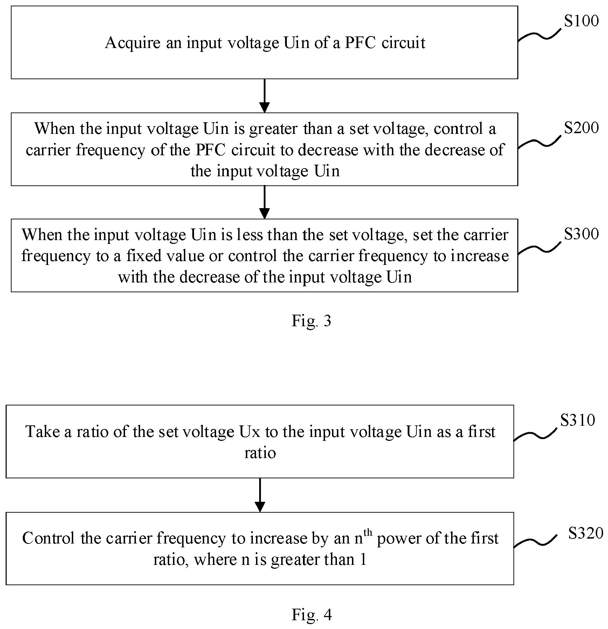

Based on the PFC circuits described above, referring to Fig. 3, the control method includes, but not limited to, the following steps.

At S 100, an input voltage Uin of the PFC circuit is acquired.

At S200, when the input voltage Uin is greater than a set voltage, a carrier frequency of the PFC circuit is controlled to decrease with a decrease of the input voltage Uin.

At S300, when the input voltage Uin is less than the set voltage, the carrier frequency is set to a fixed value or the carrier frequency is controlled to increase with the decrease of the input voltage Uin.

The input voltage Uin of the PFC circuit is obtained by AC mains electricity rectification, and varies periodically. In order to ensure that the input current Iin of the PFC circuit varies with the input voltage Uin, the carrier frequency is generally controlled by means of a variable carrier frequency control method. With the variable carrier frequency control method, the carrier frequency increases with the increase of the input voltage Uin and decreases with the decrease of the input voltage Uin. However, when the input voltage Uin is near the zero-crossing point, because the input voltage Uin approaches zero, the carrier frequency also approaches zero, so that the input current cannot follow the input voltage near the zero-crossing point, which is equivalent to generating current harmonics, affecting the stability of the PFC circuit.

In order to reduce the current harmonics near the zero-crossing point, in the embodiment of the present disclosure, control intervals of carrier frequencies are divided. When the input voltage Uin is within a lower interval, that is, less than a set voltage Ux, the carrier frequency is adjusted to a fixed value or the carrier frequency is controlled to increase instead of decrease. When the input voltage Uin is greater than the set voltage Ux, the carrier frequency is controlled by means of a conventional variable carrier frequency control method. The set voltage Ux (a value greater than 0) may be set according to the actual performance of the PFC circuit.

In an embodiment, a formula for calculating the carrier frequency of the variable carrier frequency control method is as follows:

$$f = \frac{U_{in}}{\Delta IL}\left(\frac{U_o - U_{in}}{U_o}\right),$$

where, $\Delta I$ is a ripple current of the PFC circuit, and L is an inductance value of the inductance device. It can be known from the above formula that the carrier frequency $f$ varies with $\Delta I$, L, Uin and Uo, where ($\frac{U_o - U_{in}}{U_o}$) may be taken as a variable coefficient and indicated by a duty cycle D, so that the above formula can be simplified as follows:

$$f = \frac{U_{in}D}{\Delta IL}.$$

According to the simplified formula, the carrier frequency $f$ may be considered to be positively correlated with the input voltage Uin to a certain extent.

Based on the PFC circuit, steps S100 to S300 and the variable carrier frequency calculation formula, the conception of the control method of the present disclosure will be illustrated by way of two control methods.

Example one: carrier frequency control according to the input voltage Uin

The value of the carrier frequency $f$ varies according to the variable carrier frequency calculation formula.

When the input voltage Uin is less than the set voltage Ux, the controller of the PFC circuit outputs a fixed frequency value, so that the carrier frequency $f$ is no longer reduced. In this case, the actual ripple current $\Delta I$ of the PFC circuit decreases with the decrease of the input voltage Uin, thus reducing the current harmonics near the zero-crossing point, realizing that the input current Iin varies with the input voltage Uin, and avoiding the problem that the input current Iin is distorted near the zero-crossing point.

Example two: carrier frequency control according to the input voltage Uin

The value of the carrier frequency $f$ varies according to the variable carrier frequency calculation formula.

When the input voltage Uin is less than the set voltage Ux, the carrier frequency $f$ varies according to the following formula:

$$f' = \left(\frac{U_x}{U_{in}}\right)^n f,$$

where n is greater than 1, and f is the above variable carrier frequency calculation formula. It can be known from the above that an $n^{th}$ power of the ratio of the set voltage $U_x$ to the input voltage $U_{in}$ is taken as a coefficient of the carrier frequency f, and it can be known from the fact that the input voltage $U_{in}$ decreases at the zero-crossing point, an actual carrier frequency f' output by the controller increases instead. That is, referring to Fig. 4, controlling the carrier frequency to increase with the decrease of the input voltage $U_{in}$ in S300 includes:

At S310, the ratio of the set voltage $U_x$ to the input voltage $U_{in}$ is taken as a first ratio.
At S320, the carrier frequency is controlled to increase by the $n^{th}$ power of the first ratio, where n is greater than 1.

The first ratio is the ratio of the set voltage $U_x$ to the input voltage $U_{in}$. Since the value of the input voltage $U_{in}$ approaches zero near the zero-crossing point, in order to prevent the actual carrier frequency f' from being too large, a maximum frequency threshold may be set. If the calculated actual carrier frequency f' is greater than the maximum frequency threshold, the actual carrier frequency f' is directly set to be the maximum frequency threshold, avoiding that a control speed of the controller or the switching device cannot keep up with the actual carrier frequency f'.

In example two, the current harmonics can also be reduced by changing the carrier frequency near the zero-crossing point, avoiding the problem that the input current $I_{in}$ is distorted near the zero-crossing point.

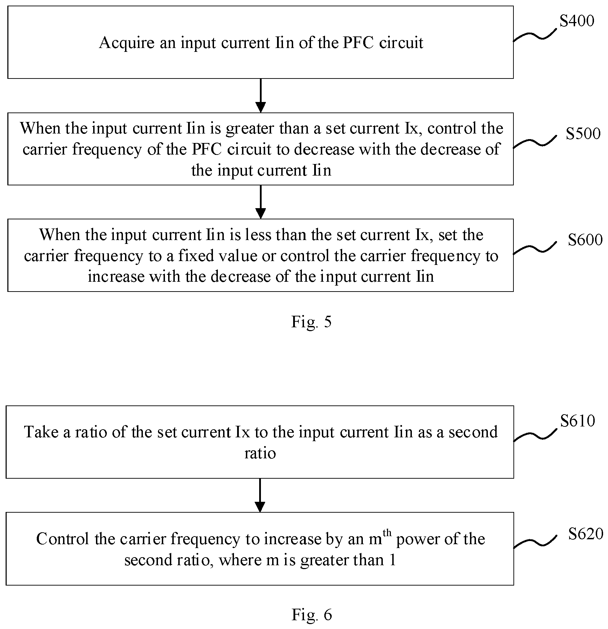

An embodiment of the present disclosure further provides a PFC circuit control method, applied to the PFC circuit. Since in the PFC circuit, the input voltage $U_{in}$ is positively correlated with the input current $I_{in}$, the above steps S100 to S300 may actually be implemented based on the acquired input current $I_{in}$. That is, referring to Fig. 5, the carrier frequency control method in the embodiment of the present disclosure includes following steps.

At S400, an input current $I_{in}$ of the PFC circuit is acquired.

At S500, when the input current $I_{in}$ is greater than a set current $I_x$, the carrier frequency of the PFC circuit is controlled to decrease with the decrease of the input current $I_{in}$.

At S600, when the input current $I_{in}$ is less than the set current $I_x$, the carrier frequency is set to a fixed value or the carrier frequency is controlled to increase with the decrease of the input current $I_{in}$.

Since the input current $I_{in}$ is positively correlated with the input voltage $U_{in}$, steps S400 to S600 are similar to steps S100 to S300. Similarly, in order to reduce the current harmonics near the zero-crossing point, in the embodiment of the present disclosure, control intervals of carrier frequencies are divided. When the input current $I_{in}$ is within a lower interval, that is, less than a set current $I_x$, the carrier frequency is adjusted to a fixed value or the carrier frequency is controlled to increase instead of decrease. When the input current $I_{in}$ is greater than the set current $I_x$, the carrier frequency is controlled by means of a conventional variable carrier frequency control method.

It is worth noting that the set current $I_x$ may be set to a value (greater than 0) according to the actual performance of the PFC circuit, and may also be set according to the ripple current $\Delta I$ of the PFC circuit. Since in the PFC circuit, the input voltage $U_{in}$ is positively correlated with the input current $I_{in}$, the variable carrier frequency calculation formula in this embodiment is the same as that in the above embodiment of the present disclosure.

Based on the PFC circuit, steps S400 to S600 and the variable carrier frequency calculation formula, the conception of the control method of the present disclosure will be illustrated by way of two control methods.

Example three: carrier frequency control according to the input current $I_{in}$

The value of the carrier frequency f varies according to the variable carrier frequency calculation formula.

When the input current $I_{in}$ is less than the set current $I_x$, the controller of the PFC circuit outputs a fixed frequency value, so that the carrier frequency f is no longer reduced. In this case, the actual ripple current $\Delta I$ of the PFC circuit decreases with the decrease of the input current $I_{in}$, thus reducing the current harmonics near the zero-crossing point, realizing that the input current $I_{in}$ varies with the input current $I_{in}$, and avoiding the problem that the input current $I_{in}$ is distorted near the zero-crossing point.

Example four: carrier frequency control according to the input current $I_{in}$

The value of the carrier frequency f varies according to the variable carrier frequency calculation formula.

When the input current $I_{in}$ is less than the set current $I_x$, the carrier frequency f varies according to the following formula:

$$f'' = \left(\frac{I_x}{I_{in}}\right)^m f,$$

where m is greater than 1, and f is the above variable carrier frequency calculation formula. It can be known from the above that an $m^{th}$ power of the ratio of the set current $I_x$ to the input current $I_{in}$ is taken as a coefficient of the carrier frequency *f*, and it can be known from the fact that the input current Iin decreases at the zero-crossing point, an actual carrier frequency *f'* output by the controller increases instead. That is, referring to Fig. 6, controlling the carrier frequency to increase with the decrease of the input current Iin in S600 includes following steps.

At S610, the ratio of the set current Ix to the input current Iin is taken as a second ratio.

At S620, the carrier frequency is controlled to increase by the $m^{th}$ power of the second ratio, where m is greater than 1.

The second ratio is the ratio of the set current Ix to the input current Iin. Since the value of the input current Iin approaches zero near the zero-crossing point, in order to prevent the actual carrier frequency *f'* from being too large, a maximum frequency threshold may also be set. If the calculated actual carrier frequency *f'* is greater than the maximum frequency threshold, the actual carrier frequency *f'* is directly set to the maximum frequency threshold, avoiding that a control speed of the controller or the switching device cannot keep up with the actual carrier frequency *f'*.

In example four, the current harmonics can also be reduced by changing the carrier frequency near the zero-crossing point, avoiding the problem that the input current Iin is distorted near the zero-crossing point.

It can be known from the above four examples that in the embodiment of the present disclosure, the carrier frequency is specially controlled near the zero-crossing point, such that the carrier frequency no longer decreases with the decrease of the input voltage Uin or the input current Iin, and is set to a fixed value or increases with the decrease of the input voltage Uin or the input current Iin, thereby reducing the current harmonics near the zero-crossing point and improving the operating stability of the PFC circuit.

An embodiment of the present disclosure further provides a carrier frequency control device for PFC. The device includes at least one processor and a memory configured to be communicatively connected with the at least one processor. The memory stores an instruction executable by the at least one processor which, when executed by the at least one processor, cause the at least one processor to perform the carrier frequency control method for PFC in any one of the above two embodiments.

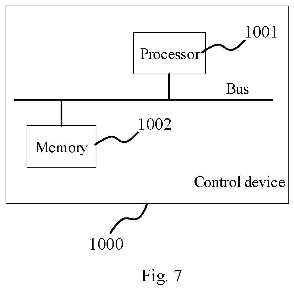

Referring to fig. 7, the control processor 1001 and memory 1002 in the control device 1000 being connected by a bus is taken as an example. As a non-transient computer-readable storage medium, the memory 1002 may be configured to store non-transient software programs and non-transient computer-executable programs. In addition, the memory 1002 may include a high-speed random access memory, and may also include a non-transient memory, such as at least one magnetic disk storage device, a flash memory device, or other non-transient solid state storage device. In some implementations, the memory 1002 may include memories remotely located with respect to the control processor 1001, and these remote memories may be connected to the control device 1000 through networks. Examples of the above networks include, but are not limited to, the Internet, an intranet, a local area network, a mobile communication network and combinations thereof.

Those having ordinary skills in the art can understand that the device structure shown in Fig. 7 does not constitute a limitation to the control device 1000 and may include more or fewer components than shown, or combinations of components, or different component arrangements.

In the embodiment of the present disclosure, the carrier frequency control method is performed by the carrier frequency control device. For a carrier frequency corresponding to an input voltage/input current near the zero-crossing point, by limiting the carrier frequency to a fixed value or increasing the carrier frequency with the decrease of the input voltage/input current, the situation where the input current of the PFC circuit cannot follow the input voltage near the zero-crossing point can be alleviated, leading to reduced current harmonics and an improved operating stability of the PFC circuit.

An embodiment of the present disclosure further provides a circuit board, including the carrier frequency control device. The carrier frequency control device is integrated on the circuit board. For a carrier frequency corresponding to an input voltage/input current near the zero-crossing point, by limiting the carrier frequency to a fixed value or increasing the carrier frequency with the decrease of input voltage/the input current, the situation where the input current of the PFC circuit cannot follow the input voltage near the zero-crossing point can be alleviated, leading to reduced current harmonics and an improved operating stability of the PFC circuit.

An embodiment of the present disclosure further provides an air conditioner, including the circuit board described above. By disposing the circuit board in an air conditioner to control the air conditioner, the ripple current of the PFC circuit at zero-crossing point in air conditioner can be controlled. That is, for a carrier frequency corresponding to an input voltage/input current near the zero-crossing point, by limiting the carrier frequency to a fixed value or increasing the carrier frequency with the decrease of the input voltage/input current, the situation where the input current of the PFC circuit cannot follow the input voltage near the zero-crossing point can be alleviated, leading to reduced current harmonics and an improved operating stability of the PFC circuit.

In accordance with a fifth aspect of the present disclosure, an embodiment provides a computer-readable storage medium, storing a computer-executable instruction which, when executed by one or more control processors, for example, by a control processor 1001 in Fig. 7, causes the one or more control processors to perform the overcurrent protection method in the above embodiments, for example, perform the steps S100 to S300 in Fig. 3, S310 to S320 in Fig. 4, S400 to S600 in Fig. 5 and S610 to S620 in Fig. 6.

The device embodiments described above are merely illustrative, and the units described as separate components may or may not be physically separated, that is, they may be located in one place, or may be distributed onto multiple network elements. Some or all of the modules may be selected according to actual needs to achieve the purpose of the embodiment.

Those having ordinary skills in the art can understand that all or some of the steps, and systems in the method disclosed above may be implemented as software, firmware, hardware and appropriate combinations thereof. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, and the computer-readable medium may include a computer storage medium (or a non-transitory medium) and a communication medium (or a transitory medium). As is well known to those having ordinary skills in the art, the term "computer storage medium" includes volatile and nonvolatile, removable and non-removable media implemented in any method or technology for storing information such as computer-readable instructions, data structures, program modules or other data. A computer storage medium may include RAM, ROM, EEPROM, flash memory or other memory technologies, CD-ROM, digital versatile disk (DVD) or other optical disc storage, magnetic cassette, magnetic tape, magnetic disk storage or other magnetic storage devices, or any other media that can be used to store desired information and can be accessed by a computer. In addition, it is well known to those having ordinary skills in the art that the communication medium may generally include computer-readable instructions, data structures, program modules or other data in a modulated data signal such as a carrier wave or other transmission mechanism, and may include any information delivery medium.

The above is a detailed description of some embodiments of the present disclosure, but the present disclosure is not limited thereto. Those having ordinary skills in the art can also make various equivalent modifications or substitutions without violating the scope of the present disclosure, and these equivalent modifications or substitutions are included in the scope defined by the appended claims of the present disclosure.

**Claims**

1. A carrier frequency control method for Power Factor Correction, PFC, which is applied to a PFC circuit, the carrier frequency control method comprising:

   acquiring an input voltage of the PFC circuit;
   in response to the input voltage being greater than a set voltage, controlling a carrier frequency of the PFC circuit to decrease with a decrease of the input voltage; and
   in response to the input voltage being less than the set voltage, setting the carrier frequency to a fixed value or controlling the carrier frequency to increase with a decrease of the input voltage.

2. The carrier frequency control method of claim 1, wherein controlling the carrier frequency to increase with the decrease of the input voltage comprises:

   taking a ratio of the set voltage to the input voltage as a first ratio; and
   controlling the carrier frequency to increase by an $n^{th}$ power of the first ratio, where n is greater than 1.

3. The carrier frequency control method of claim 2, wherein in response to a frequency value obtained after increasing the carrier frequency by the $n^{th}$ power of the first ratio being greater than a maximum frequency threshold, the carrier frequency is set to the maximum frequency threshold.

4. A carrier frequency control method for Power Factor Correction, PFC, which is applied to a PFC circuit, the carrier frequency control method comprising:

   acquiring an input current of the PFC circuit;
   in response to the input current being greater than a set current, controlling a carrier frequency of the PFC circuit to decrease with a decrease of the input current; and
   in response to the input current being less than the set current, setting the carrier frequency to a fixed value or controlling the carrier frequency to increase with a decrease of the input current.

5. The carrier frequency control method of claim 4, wherein controlling the carrier frequency to increase with the decrease of the input current comprises:

   taking a ratio of the set current to the input current as a second ratio; and
   controlling the carrier frequency to increase by an $m^{th}$ power of the second ratio, where m is greater than 1.

6. The carrier frequency control method of claim 5, wherein in response to a frequency value obtained after increasing the carrier frequency by the $m^{th}$ power of the second ratio being greater than a maximum frequency threshold, the carrier frequency is set to the maximum frequency threshold.

7. A carrier frequency control device for Power Factor Correction, PFC, comprising at least one processor and a memory configured to be communicatively connected with the at least one processor, the memory storing an instruction executable by the at least one processor which, when executed by the at least one processor, causes the at least one processor to perform the carrier frequency control method of any one of claims 1 to 3 or the carrier frequency control method of any one of claims 4 to 6.

8. A circuit board, comprising the carrier frequency control device of claim 7.

9. An air conditioner, comprising the circuit board of claim 8.

10. A computer-readable storage medium, storing a computer-executable instruction which, when executed by a computer, causes the computer to perform the carrier frequency control method for PFC of any one of claims 1 to 3 or the carrier frequency control method of any one of claims 4 to 6.

Fig. 1

Fig. 2

Acquire an input voltage Uin of a PFC circuit

S100

When the input voltage Uin is greater than a set voltage, control a carrier frequency of the PFC circuit to decrease with the decrease of the input voltage Uin

S200

When the input voltage Uin is less than the set voltage, set the carrier frequency to a fixed value or control the carrier frequency to increase with the decrease of the input voltage Uin

S300

Fig. 3

Take a ratio of the set voltage Ux to the input voltage Uin as a first ratio

S310

Control the carrier frequency to increase by an $n^{th}$ power of the first ratio, where n is greater than 1

S320

Fig. 4

Acquire an input current Iin of the PFC circuit — S400

When the input current Iin is greater than a set current Ix, control the carrier frequency of the PFC circuit to decrease with the decrease of the input current Iin — S500

When the input current Iin is less than the set current Ix, set the carrier frequency to a fixed value or control the carrier frequency to increase with the decrease of the input current Iin — S600

Fig. 5

Take a ratio of the set current Ix to the input current Iin as a second ratio — S610

Control the carrier frequency to increase by an $m^{th}$ power of the second ratio, where m is greater than 1 — S620

Fig. 6

1001

Processor

Bus

1002

Memory

Control device

1000

Fig. 7

## INTERNATIONAL SEARCH REPORT

| International application No. |
| --- |
| **PCT/CN2021/127087** |

**A.  CLASSIFICATION OF SUBJECT MATTER**

H02M 1/42(2007.01)i

According to International Patent Classification (IPC) or to both national classification and IPC

**B.  FIELDS SEARCHED**

Minimum documentation searched (classification system followed by classification symbols)

H02M

Documentation searched other than minimum documentation to the extent that such documents are included in the fields searched

Electronic data base consulted during the international search (name of data base and, where practicable, search terms used)

CNABS; CNTXT; DWPI; SIPOABS; CNKI; IEEE: 功率因数, 功率因素, 功率因子, 载频, 载波, 三角波, 锯齿波, 开关, 切换, 频率, 周期, 调制, 抖频, 抖动, 扩频, 调频, 电压, 电流, 相位, power, factor, PFC, carrier, triangle, sawtooth, switching, frequency, cycle, modulate, jitter, dither, variable, spread, voltage, current, phase

**C.  DOCUMENTS CONSIDERED TO BE RELEVANT**

| Category* | Citation of document, with indication, where appropriate, of the relevant passages | Relevant to claim No. |
| --- | --- | --- |
| X | CN 103166486 A (NXP B.V.) 19 June 2013 (2013-06-19) description, paragraphs 0034-0084, and figures 1-7 | 1, 4, 7-10 |
| A | CN 107482898 A (GUANGDONG MEDIA REFRIGERATION EQUIPMENT CO., LTD.) 15 December 2017 (2017-12-15) entire document | 1-10 |
| A | CN 108039816 A (ZHENGZHOU YUNHAI INFORMATION TECHNOLOGY CO., LTD.) 15 May 2018 (2018-05-15) entire document | 1-10 |
| A | JP 2014027844 A (FUJITSU GENERAL LTD.) 06 February 2014 (2014-02-06) entire document | 1-10 |
| A | 王斌 等 (WANG, Bin et al.). "单周期控制PFC的变载频技术研究 (non-official translation: Research on Variable Carrier Frequency Technology for One Cycle Control PFC)" *2016国际制冷空调技术交流会 (non-official translation: 2016 International Refrigeration and Air Conditioning Technology Exchange Conference)*, 01 November 2016 (2016-11-01), pp. 376-379 | 1-10 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 December 2021** | **29 January 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/127087**

| Patent document cited in search report | | | Publication date (day/month/year) | Patent family member(s) | | | Publication date (day/month/year) |
|---|---|---|---|---|---|---|---|
| CN | 103166486 | A | 19 June 2013 | PT | 2605103 | T | 13 March 2017 |
| | | | | US | 2013188407 | A1 | 25 July 2013 |
| | | | | US | 8963511 | B2 | 24 February 2015 |
| | | | | PL | 2605103 | T3 | 31 May 2017 |
| | | | | EP | 2605103 | A1 | 19 June 2013 |
| | | | | EP | 2605103 | B1 | 14 December 2016 |
| | | | | ES | 2618212 | T3 | 21 June 2017 |
| | | | | CN | 103166486 | B | 08 April 2015 |
| CN | 107482898 | A | 15 December 2017 | CN | 107482898 | B | 06 March 2020 |
| CN | 108039816 | A | 15 May 2018 | None | | | |
| JP | 2014027844 | A | 06 February 2014 | JP | 5958153 | B2 | 27 July 2016 |

Form PCT/ISA/210 (patent family annex) (January 2015)

**REFERENCES CITED IN THE DESCRIPTION**

**Patent documents cited in the description**

- CN 202011551456